# EUROPEAN PATENT SPECIFICATION

(11) **EP 2 616 860 B1**
(45) Date of publication and mention of the grant of the patent: **18.03.2015**
(21) Application number: 10752809.3
(22) Date of filing: 13.09.2010
(51) Int. Cl.: G02B 6/44

(54) **RISER BOX FOR OPTICAL FIBER CABLE DROP-OFF**
VERTEILERSCHRANK FÜR VERZWEIGUNG VON STEIGENDEM GLASFASERKABEL
ARMOIRE DE DISTRIBUTION POUR BRANCHEMENT DE CÂBLES À FIBRES OPTIQUES MONTANTS

(43) Date of publication of application: 24.07.2013
(73) Proprietor: Prysmian S.p.A., 20126 Milano (IT)
(72) Inventor: ABBIATI, Fabio, I-20126 Milano (IT); GRIFFITHS, Ian, James, I-20126 Milano (IT); LE DISSEZ, Arnaud, I-20126 Milano (IT)
(74) Representative: Colombo, Stefano Paolo
(86) International application number: PCT/EP2010/063360
(87) International publication number: WO 2012/034576

(56) References cited:
- EP-A1- 0 744 640
- EP-A1- 2 116 881
- WO-A1-2009/102912
- WO-A1-2010/036549
- WO-A1-2010/039435
- US-B1- 6 249 632
- US-B2- 7 751 675

## Description

### Technical field

The present invention relates to the field of apparatuses for the installation of optical access networks. In particular, the present invention relates to a riser box for housing an optical connection between a riser cable and at least one drop cable of an optical access network.

### Background art

An FTTH ("Fiber To The Home") network is an optical access network providing a number of end users with broadband communication services, i.e. with services requiring data transmission at a rate of some hundreds of Mbit/s or more.

Typically, an FTTH network comprises a distribution cabinet which cooperates with a transport network (e.g. a metro core network) and which is typically located in the basement of a building where the end users reside. An optical cable, that will be termed herein after "riser cable", exits the distribution cabinet and vertically runs through the building from the basement up to all the building floors. Between two consecutive floors, the riser cable is typically laid down within a substantially vertical duct, which may be fixed to the surface of a building wall or may be embedded within the thickness of the wall (e.g. in the concrete) and which mechanically protects the riser cable.

At each floor of the building, the riser cable may be optically connected to one or more optical cables that will be termed herein after "drop cables". Each drop cable is typically terminated at its far end by a respective termination box located within or in proximity of the apartment or office of an end user.

At each floor, the optical connection(s) between the riser cable and the drop cable(s) are typically arranged in a so-called "optical transition box" or "riser box" fixed to a wall.

A riser box typically comprises a base, a splice tray and a cover. The base typically has an area suitable for housing the ends of the drop cables and a path or channel suitable for housing a portion of the riser cable, so that it passes through the riser box. The sidewalls of the base have openings allowing the riser cable to enter and exit the base and allowing the ends of the drop cables to be inserted into the riser box.

US 6,249,632 B1 discloses a fiber optic splice closure including a housing, a support within the housing, at least one splice organizer pivotally connected to the support, and a slack storage holder pivotally connected to the support. The housing preferably has opposing ends and at least one cable port therein for receiving at least one fiber optic cable therethrough. The housing also includes sides extending between the opposing ends, and includes first and second mating housing portions detachably secured together. The support may be connected to an interior of the first housing portion adjacent end thereof. The support preferably includes portions defining a plurality of pivotal mounting locations. The slack storage holder is pivotally connected at a first pivotal mounting location of the support and is pivotally movable between a stored position and a raised position. The slack storage holder when in the stored position is preferably generally parallel to and in spaced apart relation from adjacent interior portions of the first housing portion. Accordingly, the slack storage holder thus preferably defines a fiber routing area with adjacent housing portions. The slack storage holder can be moved to the raised position facilitating access to the fiber routing area.

WO2010/036549 A1 discloses an enclosure for distributing optical fibers for communications including a housing to house at least one optical fiber from a distribution cable and at least one drop fiber and an extractable fiber organizer disposable in the housing. The extractable fiber organizer includes at least one splice tray rotatably coupled to a fiber ramp, the fiber ramp being detachably disposed in the housing. A fiber slack storage unit is disposed within the housing, the fiber slack storage unit including a fiber slack storage tray configured to spool fiber slack. The enclosure with the extractable fiber organizer allows the installer or service technician to work on fiber splices in a comfortable position, especially for an enclosure located in a riser closet or underground chamber.

EP 2 141 528 describes an optical fiber distribution box comprising a first layer configured to receive a fiber optic cable and a second layer configured to distribute the fiber to the user. In the first layer, one side includes a cable inlet port and there are also provided two cable outlet ports. The first cable outlet port is provided such that a cable, such as a riser cable, can be routed straight through the first layer. The second cable outlet port is located for the instances in which a cable is to pass through 180 degrees before exiting the first layer. The second layer includes a number of receiving channels disposed around its edges. The receiving channels are substantially symmetrically placed such that the second layer may be engaged and aligned with the first layer in a number of orientations.

WO 2008/017622 describes an apparatus for optical fiber management comprising an annular optical fiber organizer for storing length(s) of fiber, and an organizer mounting member.

US 7,751,675 describes a wall box adapted to be mounted at a mid-span access location of a fiber communication cable. The wall box includes an enclosure having a main body with an open front side. The enclosure also includes a front cover for opening and closing the open front side of the main body. The wall box defines first and second entrance/exit openings positioned at opposite sides of the enclosure. The main body defines an open region through an exterior wall of the main body. The open region extends from the first cable entrance/exit opening to the second cable entrance/exit opening. The enclosure also includes a cable cover that is mounted to the main body to cover the open region.

WO 2010/039435 discloses an enclosure for receiving at least one telecommunication cable. The enclosure comprises a housing at least one portion of which is configured for the passage of a cable into/out of the enclosure. The housing portion is repositionable to change direction of passage of the cable relative to the housing. In particular, the enclosure comprises a removable cover and a base. Two portions of the base, specifically corner walls that extend at an angle (e.g. 45°) between the adjacent sides of the base, are configured for the passage, into and out of the housing, of a cable (i.e. the main service cable). The corner walls of the base of the housing are removable and can be repositioned to change the entry/exit directions of the main service cable. The base contains also a number of entry port locations at which openings can be made into the housing as required for additional cables (i.e. drop cables).

In general, when a riser box has to be installed at a floor of a building for protecting the optical connection between a riser cable and one or more drop cables, the operator responsible of the installation typically fixes the base of the riser box to a wall portion so that, in the box base, the path suitable for housing a portion of the riser cable is substantially vertically oriented. Then, the operator frees a portion of the riser cable from the duct in which it is laid down and arranges the riser cable in the dedicated path in the box base, so that the riser cable passes straight through the base (typically, along the vertical direction).

For minimizing possible bendings of the riser cable, it may be more convenient that the riser cable passes through the base along one of its sides (for instance, its left side) rather than the opposite one (i.e. the right side). The most appropriate side (left or right) basically depends on the reciprocal positions of the duct in which the riser cable is laid down and of the wall portion to which the box base is fixed. Hence, the most appropriate side should be decided by the operator during installation, on a case-by-case basis.

The wall box described by US 7,751,675 allows the operator to decide during installation which ones, between the first and second entrance/exit openings positioned at the opposite sides of the enclosure, are the most appropriate ones for housing the riser cable.

The wall box described by US 7,751,675, although allows to install the riser cable in two different entrance/exit opening, is disadvantageously bulky. Indeed, providing the first and second entrance/exit openings positioned at opposite sides of the enclosure requires increasing the size of the enclosure, and therefore of the whole box. This increase of size is undesired, because in the field of components for optical access networks a reduced size is a very important requirement.

### Summary of the invention

The Applicant has tackled the problem of providing a riser box suitable for housing an optical connection between a riser cable and a drop cable of an optical access network which overcomes the aforesaid drawbacks.

The Applicant has tackled the problem of providing a riser box suitable for housing an optical connection between a riser cable and a drop cable of an optical access network which can be easily installed in narrow spaces, adapting to different locations in a building.

In particular the Applicant provided a riser box in which the riser cable may be arranged so as to pass straight through the riser box along either sides thereof (i.e. either the left or right side), according to the reciprocal position of the duct in which the riser cable is laid down and of the base of the riser box, and which at the same time has very reduced size.

According to a first aspect, the present invention provides a riser box suitable for housing an optical connection between a riser cable and at least one drop cable of an optical access network, the riser box comprising:
- a base having a first channel configured to allow the riser cable passing through the base along a first side thereof, and a second channel substantially parallel to the first channel and configured to allow the riser cable passing through the base along an opposite second side thereof;
- at least one splice tray; and
- an adapter configured to support the splice tray, the adapter being alternatively connectable to the base according to a first configuration, in which it engages the first channel and leaves the second channel free, and a second configuration, in which it engages the second channel and leaves the first channel free.

Preferably, the base comprises a first fixing element.

Preferably, the adapter comprises two second fixing elements suitable for alternatively engaging with the first fixing element of the base for connecting the adapter to the base alternatively according to the first configuration and the second configuration.

Preferably, the base comprises two opposite sidewalls perpendicular to the first channel and the second channel.

Preferably, one of the two opposite sidewalls has at least one first weakening line defining at least one first removable portion thereof, each one of the first weakening lines being such that, when the corresponding first removable portion is removed, an opening is created in the sidewall which is suitable for receiving an end of the drop cable.

Preferably, each one of the two opposite sidewalls has a first recess substantially aligned with the first channel and a second recess substantially aligned with the second channel.

According to advantageous embodiments, at least one of the first recess and the second recess is partially engaged by a removable closure tab.

Profitably, the riser box further comprises a cover configured to be fitted onto the base for closing the riser box.

Preferably, the cover has second weakening lines defining opposite second removable portions and third weakening lines defining opposite third removable portions, the opposite second removable portions being aligned with the first channel and the opposite third removable portions being aligned with the second channel when the cover is fitted onto the base.

According to advantageous embodiments, the riser box further comprises a locking mechanism for locking the cover on the base.

Preferably, the locking mechanism comprises a locking device rotatably hinged to the base, the locking device being rotatable between an installation position, in which it leaves free access to the interior of the base, and a locking position, in which it projects towards the interior of the base.

Preferably, the adapter comprises at least one pair of hinges configured to rotatably hinge the splice tray to the adapter.

Profitably, the splice tray has at least one fiber inlet/outlet allowing one or more optical fibers entering and exiting an upper surface of the splice tray, the fiber inlet/outlet (44) being arranged between the hinges when the splice tray is rotatably hinged to the adapter.

Preferably, the riser box comprises at least two splice trays.

Profitably, each one of the splice trays is rotatable between a first position and a second position, wherein:
- when all the splice trays are rotated in the first position, the splice trays are stacked and at least partially cover the adapter; and
- when an overhanging splice tray of the splice trays is rotated in the second position and an underlying splice tray of the splice trays is rotated in the first position, the overhanging splice tray leaves free access to the underlying splice tray.

### Brief description of the drawings

The present invention will become fully clear by reading the following detailed description, given by way of example and not of limitation, to be read by referring to the accompanying drawings, wherein:
- Figure 1 is a perspective view of a riser box according to a preferred embodiment of the present invention;
- Figure 2 is a perspective view of the base of the riser box of Figure 1;
- Figure 3 is a perspective view of the adapter of the riser box of Figure 1;
- Figures 4a and 4b are perspective views of the base and adapter assembled according to a first and second configuration, respectively;
- Figures 5a and 5b are enlarged views of a detail of Figures 4a and 4b, respectively;
- Figures 6a and 6b are enlarged views of a detail of Figures 1 and 2, respectively;
- Figure 7 is a perspective view of the riser box of Figure 1, in a partially assembled configuration;
- Figure 8 is a front view of the riser box of Figure 1, in a partially assembled configuration;
- Figure 9 is a perspective view of a riser box according to an advantageous variant, in a partially assembled configuration; and
- Figure 10 is a front view of the riser box of Figure 9.

### Detailed description of preferred embodiments of the invention

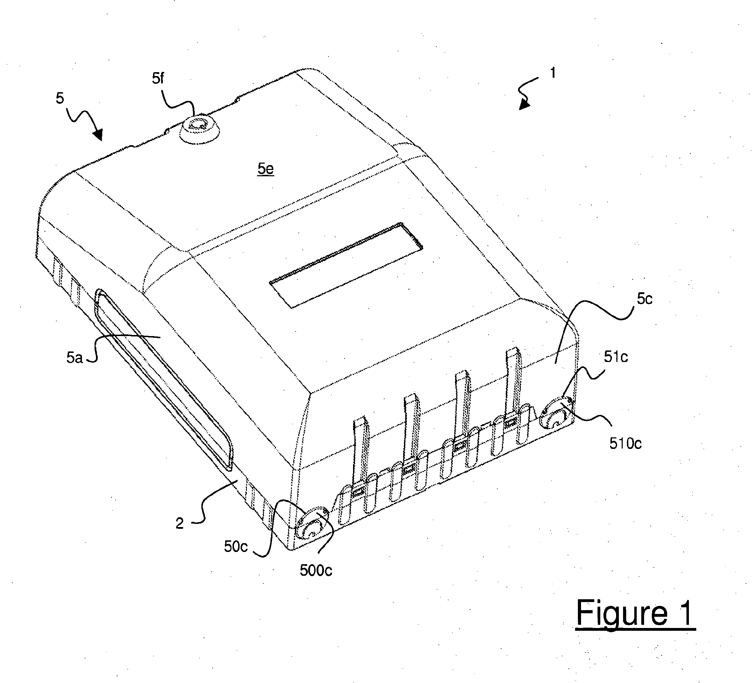

By referring to Figures 1 to 8, a riser box 1 according to a preferred embodiment of the present invention will be described in detail. The Figures are not in scale.

The riser box 1 comprises a base 2, an adapter 3, one or more splice trays 4-1, 4-2, ... 4-8 and a cover 5.

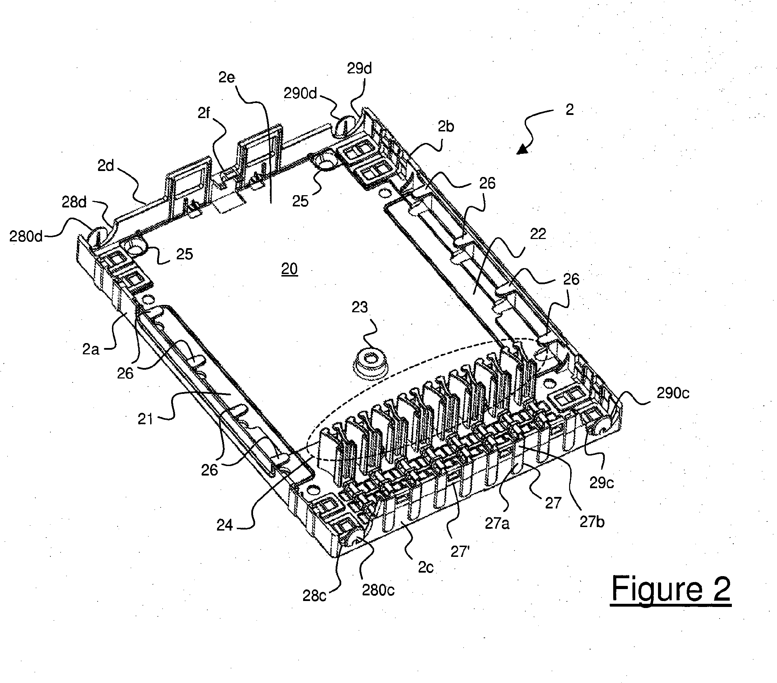

With reference to Figure 2, the base 2 comprises a bottom 2e and four sidewalls 2a, 2b, 2c, 2d. Preferably, the bottom 2e is substantially rectangular. The sidewalls 2a, 2b, 2c, 2d are substantially perpendicular to the bottom 2e. Herein after, the opposite sidewalls 2a and 2b of the base 2 will be termed "left sidewall" and "right sidewall", respectively.

The bottom 2e comprises a central area 20, a left channel 21 and a right channel 22. The left channel 21 and the right channel 22 are preferably parallel to each other and are arranged on opposite sides of the central area 20. In particular, the left channel 21 and the right channel 22 are arranged along the left sidewall 2a and the right sidewall 2b of the base 2, respectively.

The central area 20 comprises an adapter receiving portion having a substantially rectangular shape. The adapter receiving portion has a first fixing element 23 suitable for fixing the adapter 3 to the base 2, as it will be described in further detail herein after. The first fixing element 23 is preferably in the form of a hollow cylinder projecting from the adapter receiving portion towards the interior of the base 2. The internal surface of the hollow cylinder may be threaded. Alternatively, the hollow cylinder may house a smaller internally threaded hollow cylinder, which is preferably made of metal. The first fixing element 23 is preferably located at a same distance from the left channel 21 and the right channel 22.

The central area 20 further preferably comprises a drop cable receiving portion arranged between the adapter receiving portion and the sidewall 2c. The drop cable receiving portion preferably has a plurality of drop cable fixing tabs 24 facing the sidewall 2c.

Preferably, the bottom 2e also has fixing holes 25 which are suitable for fixing the base 2 to a wall of a building by means of screws, bolts or the like.

Each of the left sidewall 2a and right sidewall 2b preferably forms at least one fibre retaining tab 26 projecting from the free edge thereof along a direction substantially parallel to the bottom 2e. In the embodiment shown in Figures 1 to 8, each of the left sidewall 2a and right sidewall 2b forms four fibre retaining tabs 26 evenly distributed along the left channel 21 and the right channel 22, respectively.

The sidewall 2c has weakening lines defining removable portions of the sidewall 2c. In particular, the sidewall 2c preferably has a number of U-shaped weakening lines 27 and a straight weakening line 27' that intersects all the U-shaped weakening lines 27. In the embodiment shown in Figures 1 to 8, the sidewall 2c has eight weakening lines 27. This is of course not limiting. Each U-shaped weakening line 27, together with a portion of the straight weakening line 27', defines a respective couple of aligned removable portions 27a, 27b of the sidewall 2c. The aligned removable portions 27a, 27b defined by a same weakening line 27 may be independently removed (e.g. by pressing them with a finger tip or a tool) for creating an opening suitable for receiving the free end of one or more drop cables. In particular, if only the removable portion 27b is removed, an opening is created that may receive the free end of a single drop cable. Otherwise, if both the removable portions 27a and 27b are removed, a larger opening is created that may receive the free end of two drop cables.

Each one of the sidewalls 2c, 2d has a recess 28c, 28d (which is termed herein after "left recess") substantially aligned with the left channel 21 and a recess 29c, 29d (which is termed herein after "right recess") substantially aligned with the right channel 22. Both the left recesses 28c, 28d and the right recesses 29c, 29d are preferably semicircular. Each one of the recesses 28c, 28d, 29c, 29d is preferably at least partially engaged by a respective closure tab 280c, 280d, 290c, 290d. Each one of the closure tabs 280c, 280d, 290c, 290d is connected to the edge of the respective recess 28c, 28d, 29c, 29d along a weakening line. Each closure tab 280c, 280d, 290c, 290d is accordingly removable (e.g. by pressing it with a finger tip or a tool) for clearing the respective recess 28c, 28d, 29c, 29d.

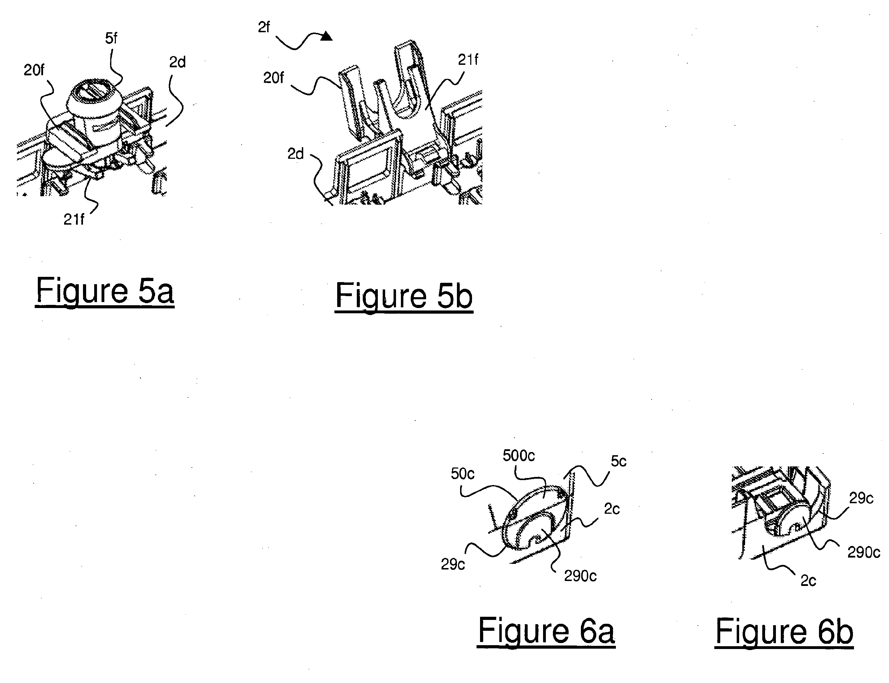

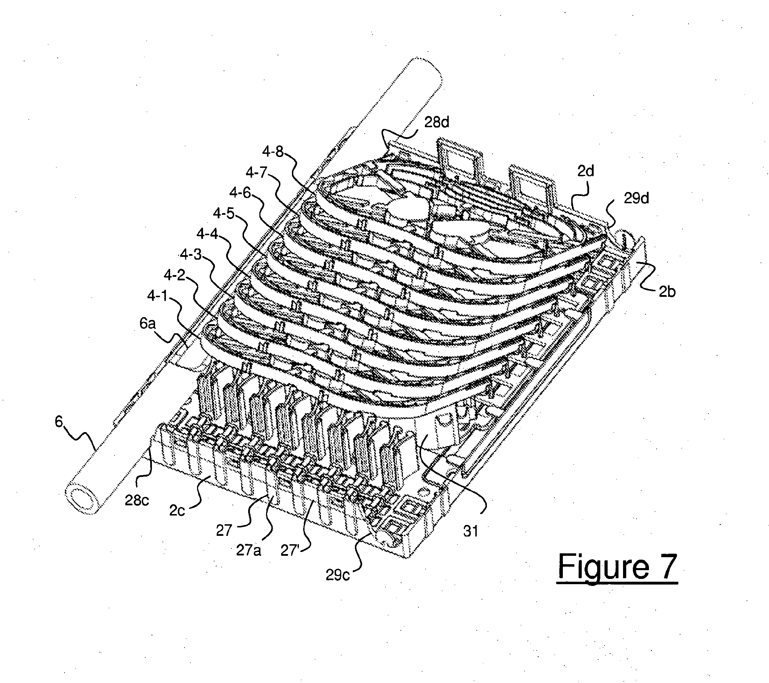

Preferably, the base 2 also comprises a locking device 2f. The locking device 2f preferably comprises a U-shaped body having two parallel arms. In the embodiment show in Figures 1 to 8 (see Figure 5b), the locking device 2f comprises two U-shaped bodies 20f, 21 f. The locking device 2f is rotatably hinged to the free edge of the sidewall 2d, at an intermediate position thereof. In particular, the locking device 2f is rotatable between an installation position (shown in Figure 5b), in which it leaves free access to the interior of the base 2, and a locking position (shown in Figure 5a), in which it projects towards the interior of the base 2. In the locking position, the overhanging U-shaped body 20f lies on a plane substantially parallel to the bottom 2e of the base 2, whereas the underlying U-shaped body 21f lies on a further plane tilted relative to the bottom 2e of the base 2. When the locking device 2f is rotated in its locking position, the overhanging U-shaped body 20f may engage with the tab of a further locking device provided on the cover 5 of the riser box 1 for safely locking the cover 5 to the base 2, as it will be described in further detail herein after. Besides, when the locking device 2f is rotated in its locking position, the underlying U-shaped body 21f blocks the splice trays 4-1, 4-2, ... 4-8 in their stacked position that is shown in Figure 7 and that will be described in detail herein after.

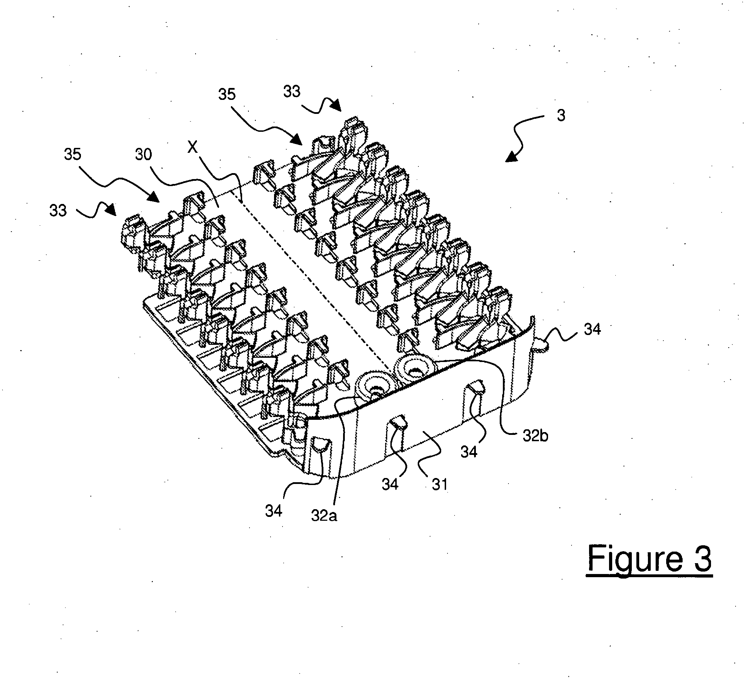

With reference now to Figure 3, the adapter 3 preferably comprises a plate 30 and a wall 31. The wall 31 is connected to the base 30 along one of its edges and is substantially perpendicular to the base 30. The wall 31 preferably has fiber retaining tabs 34 projecting from its side opposite to the base 30, along a direction substantially parallel to the base 30.

The plate 30 has a substantially rectangular shape with rounded corners. The plate 30 preferably has a width equal to the sum of the width of the central area 20 and the width of one of the left channel 21 and the right channel 22 of the base 2.

The plate 30 comprises a number of elements (that will be described in detail herein after), which are preferably arranged according to a symmetric configuration relative to a symmetry axis X perpendicular to the wall 31.

In particular, the plate 30 comprises a number of pairs of hinges 33, the hinges 33 of a same pair being preferably symmetrically arranged relative to the symmetry axis X, in the proximity of the edges of the plate 30. Each pair of hinges 33 allows fixing a respective splice tray 4-1, 4-2, ... 4-8 to the adapter 3, as it will be described in further detail herein after. In the embodiment shown in Figures 1 to 8, the plate 30 comprises eight pairs of hinges 33, meaning that the riser box 1 may comprise up to eight splice trays.

Internally to the hinges 33, the plate 30 further preferably comprises a number of fiber guiding protrusions 35 arranged according to a symmetric configuration relative to the symmetry axis X. The fiber guiding protrusions 35 preferably form arched paths having a minimum bending radius that depends on the type of optical fiber comprised in the riser cable and the drop cable(s). For optical fibers of the type defined by the ITU-T Recommendation G.657A1, the minimum bending radius that provides negligible bending losses is 20 mm. The fiber guiding protrusions 35 are arranged so as to leave on the plate 30 a free area (namely, an area that does not comprise any element) about the symmetry axis X.

Further, the plate 30 has two second fixing elements 32a, 32b arranged in symmetric positions relative to the symmetry axis X. Herein after, the second fixing element 32a (which, in the perspective view of Figure 3, is placed on the left of the axis X) will be termed also "left second fixing element", whereas the second fixing element 32b (which, in the perspective view of Figure 3, is placed on the right of the axis X) will be termed also "right second fixing element". The second fixing elements 32a, 32b are suitable for alternatively engaging with the first fixing element 23 of the base 2 for fixing the adapter 3 to the base 2 according to either a first configuration or a second configuration. In particular, each of the second fixing elements 32a, 32b comprises a hollow cylinder projecting substantially perpendicularly to the plate 30 and having a cavity suitable for receiving the first fixing element 23 of the base 2.

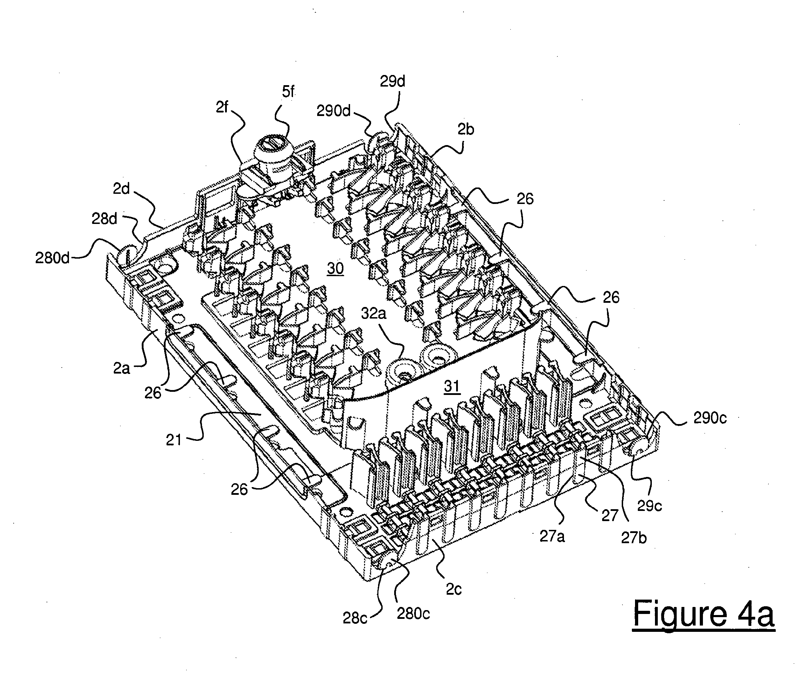

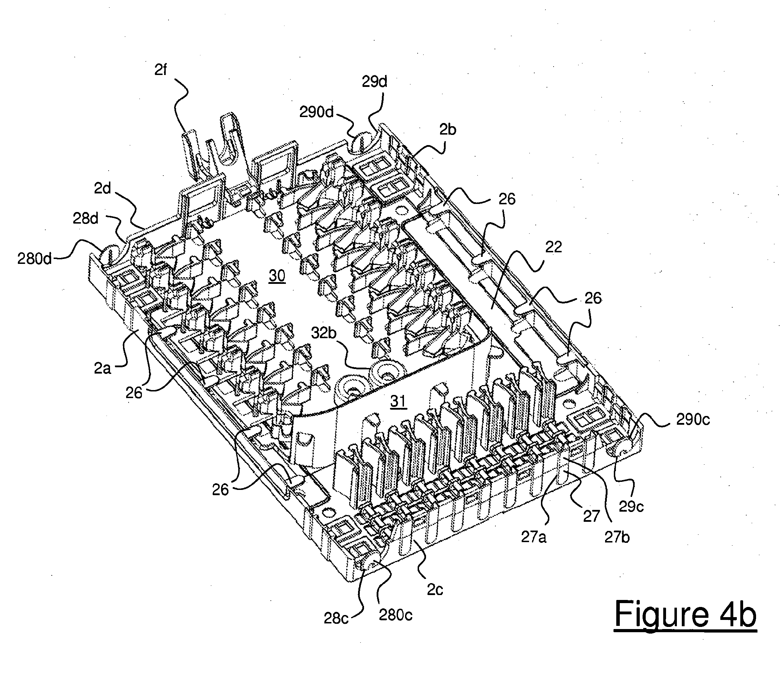

In the first configuration (shown in Figure 4a), the first fixing element 23 of the base 2 engages with the left second fixing element 32a of the adapter 3, so that the adapter 3 leans against the right sidewall 2b of the base 2 and substantially covers the central area 20 and the right channel 22 of the base 2, thereby leaving the left channel 21 free. In the second configuration (shown in Figure 4b), the first fixing element 23 of the base 2 engages with the right second fixing element 32b of the adapter 3, so that the adapter 3 leans against the left sidewall 2a of the base 2 and substantially covers the central area 20 and the left channel 21 of the base 2, thereby leaving the right channel 22 free.

Therefore, a path that allows a riser cable passing straight through the base 2 may be provided along either the left side or the right side of the base 2, by simply fixing the adapter 3 to the base 2 according to either the first or the second configuration described above.

As mentioned above, the riser box 1 comprises a number of splice trays 4-1, 4-2, ... 4-8. If the adapter 3 is provided with M pairs of hinges 33, the riser box 1 may comprise up to M splice trays. In the embodiment shown in Figures 1 to 8, the adapter 3 comprises eight pairs of hinges 33 and the riser box 1 comprises eight splice trays 4-1, 4-2, ... 4-8.

Preferably, each splice tray 4-1, 4-2, ... 4-8 has a substantially rectangular shape with rounded corners. Preferably, each splice tray 4-1, 4-2, ... 4-8 has a width substantially equal to the distance between two hinges 33 of a same pair. Each splice tray 4-1, 4-2, ... 4-8 has a surface (which will be termed herein after "upper surface") provided with a plurality of fiber guiding channels 41 running close to the periphery of the upper surface, a central mandrel 42 and a number of splice holders 43 (for instance, four splice holders). Preferably, the fiber guiding channels 41 have straight portions and curved portions, each curved portion having the above mentioned minimum bending radius. Preferably, the central mandrel 42 has a radius equal to or higher than the minimum bending radius. Further, preferably, each splice tray 4-1, 4-2, ... 4-8 has, along one of its sides, at least one fiber inlet/outlet 44 that allows one or more optical fibers entering and exiting the upper surface of the splice tray. Each splice tray 4-1, 4-2, ... 4-8 is configured for housing the splices between one or more optical fibers of the riser cable and the optical fiber(s) of one or two drop cables. In other words, each splice tray 4-1, 4-2, ... 4-8 is dedicated to manage the optical connections associated to only one or two users, as it will be described in detail herein after.

As mentioned above, each splice tray 4-1, 4-2, ... 4-8 is configured for being connected to the adapter 3 by means of one of the above mentioned pairs of hinges 33 provided on the adapter 3. When a splice tray 4-1, 4-2, ... 4-8 is hinged to the adapter 3, its at least one fiber inlet/outlet 44 is located at an intermediate position of the hinged side of the splice tray, i.e. between the hinges 33.

Each splice tray 4-1, 4-2, ... 4-8 is rotatable about the respective pair of hinges 33 between a first position and a second position. When all the splice trays 4-1, 4-2, ... 4-8 are in their first position, they are stacked and tilted relative to the base 30, with their upper surfaces facing away the base 2, and they at least partially cover the base 2 and the adapter 3, as shown in Figure 7. In this first position, the splice tray 4-1 (i.e. the one connected to the pair of hinges 33 closest to the wall 31) preferably rests on the edge of the wall 31. Further, in this first position, only the upper surface of the splice tray 4-8 (i.e. the one connected to the pair of hinges 33 closest to the sidewall 2d) is accessible, while the upper surface of each of the other splice trays 4-1, 4-2, ... 4-7 is covered by the overhanging splice tray, and is therefore not accessible.

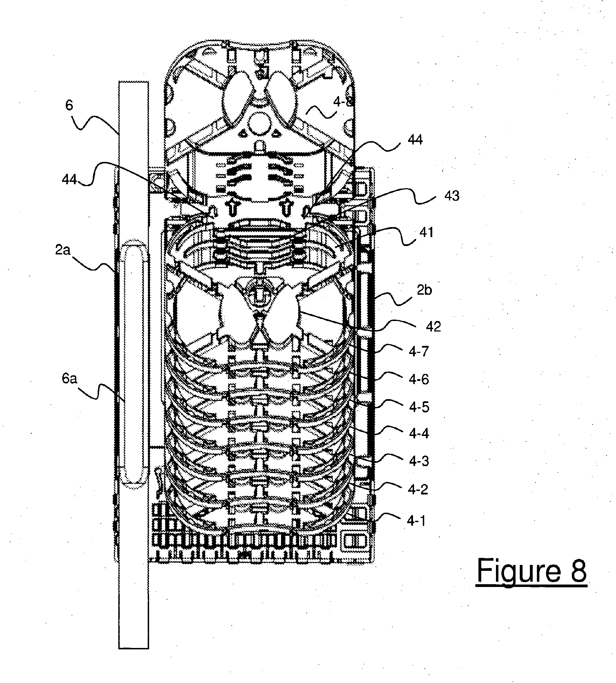

For accessing the upper surface of one the splice trays 4-1, 4-2, ... 4-7, the overhanging splice tray(s) are rotated about their respective hinges 33 from the first position shown in Figure 7 to the second position. In the second position, the overhanging splice tray(s) are tilted relative to the base 30, and leave free access to the upper surface of the immediately underlying splice tray. For instance, Figure 8 shows the overhanging splice tray 4-8 rotated from the first position to the second position, so as to leave free access to the upper surface of the underlying splice tray 4-7.

By referring again to Figure 1, the cover 5 preferably comprises a top 5e and four sidewalls 5a, 5b, 5c, 5d (in Figure 1, only the top 5e and the sidewalls 5a and 5c are visible). The shape and size of the cover 5 match with the shape and size of the base 2 so that the cover 5 may be fitted onto the base 2 for closing the riser box 1. When the cover 5 is fitted onto the base 2, the sidewalls 5a, 5b, 5c, 5d are aligned with the sidewalls 2a, 2b, 2c, 2d of the base 2, respectively.

Preferably, each one of the sidewalls 5c, 5d has a weakening line 50c, 50d defining a respective removable portion 500c, 500d of the cover 5 (which is termed herein after "left removable portion") substantially aligned with the left recess 28c, 28d when the cover 5 is fitted onto the base 2. Further, preferably, each one of the sidewalls 5c, 5d has a weakening line 51 c, 51d defining a respective removable portion 510c, 510d of the cover 5 (which is termed herein after "right removable portion") substantially aligned with the right recess 29c, 29d when the cover 5 is fitted onto the base 2. In Figure 1, only the weakening lines 50c and 51 c of the sidewall 5c with the respective left and right removable portions 500c and 510c are visible.

The weakening lines 50c, 50d, 51 c, 51d are preferably semicircular. Each weakening line 50c, 50d, 51 c, 51 d is such that, when the corresponding removable portion 500c, 500d, 510c, 510d is removed (e.g. by pressing it with a finger tip or a tool), an opening is created in the cover 5. This allows adapting the riser box 1 to receive riser cables with different diameters, as it will be described in further detail herein after.

The cover 5 preferably comprises a further locking device 5f configured to cooperate with the locking device 2f of the base 2 for locking the cover 5 onto the base 2, thereby safely closing the riser box 1. The further locking device 5f comprises a tab that may be rotated by 90° between an open position and a closed position (see Figure 5a), where it engages with the arms of the U-shaped body 20f of the locking device 2f. The further locking device 5f may include either a key lock or a screw driver operable mechanism accessible from outside the cover 5 allowing to operate the tab by means of a key or a screw driver.

Preferably, each one of the base 2, the adapter 3, the splice trays 4-1, 4-2, ... 4-8 and the cover 5 is an integrally moulded piece made of a thermoplastic material. The thermoplastic material preferably comprises an ABS (Acrylonitrile butadiene styrene) polymer.

Preferably, the riser box length is comprised from about 170 mm to 190 mm, and more preferably is equal to about 180 mm. Preferably, the riser box width is comprised from about 120 mm to 140 mm, and more preferably is equal to about 130 mm. Preferably, the riser box height is comprised from about 50 mm to 70 mm, and more preferably is equal to about 60 mm.

Herein after, an installation procedure of the riser box 1 will be described in detail.

It is assumed that a riser box 1 shall be installed at a floor of a building for making optical connections between a riser cable and one or more drop cables terminated at their far ends by respective termination boxes located within or in proximity of the apartments or offices of end users residing at that floor.

Further, it is assumed that the riser cable comprises a number of micromodules, each micromodule in turn comprising four optical fibers, and that each drop cable comprises four optical fibers. This is not limiting. More generally, the riser cable comprises a number of optical fibers (that will be termed herein after "riser fibers") which may be arranged in the riser cable sheath according to any known configuration (for instance, they may be loosely arranged within the sheath, or grouped in ribbons, modules, micromodules, etc.). Further, more generally the drop cable comprises one or more optical fibers (that will be termed herein after "drop fibers").

For installing the riser box 1, the operator frees a portion of the riser cable from the duct in which it is laid down, and then fixes the base 2 to a wall portion. The operator may fix the base 2 to the wall portion by means of screws, bolts or the like inserted in the fixing holes 25 of the base bottom 2e. The base 2 is fixed with the sidewall 2c facing downwards and the sidewall 2d facing upwards.

During this operation and the following ones, the locking device 2f is preferably rotated in its installation position shown in Figure 5b. This way, the locking device 2f does not limit the access to the base 2 and does not hamper the installation operations. It can be noticed that the rotatable locking device 2f allows maximum access to the elements comprised in the base 2 (i.e. the adapter and the splice trays) during installation, without requiring any dedicated space in the base 2. This way, the rotatable locking device 2f concurs to maximize the compactness of the riser box 1.

Then, the operator decides, based on the reciprocal position of the duct and the base 2, whether it is more convenient arranging the riser cable in the left channel 21 or in the right channel 22 of the base 2. In the first case, the operator connects the adapter 3 to the base 2 according to the above described first configuration shown in Figure 4a. As described above, in such first configuration the first fixing element 23 of the base 2 engages with the left second fixing element 32a. In the second case, the operator connects the adapter 3 to the base 2 according to the above described second configuration shown in Figure 4b. As described above, in such second configuration the first fixing element 23 of the base 2 engages with the right second fixing element 32b. For preventing detachment of the adapter 3 from the base 2, the operator may screw a threaded element (e.g. a screw, bolt or the like) in the threading of the first fixing element 23 engaging either the left second fixing element 32a or the right second fixing element 32b.

Then, if the adapter 3 is fixed to the base 2 in the first (or second) configuration, the operator may remove (e.g. by means of a pair of pliers) the fiber retaining tabs 26 formed by the left sidewall 2a (or right sidewall 2b). This operation allows easing access to the left channel 21 (or right channel 22).

Then, if the adapter 3 is fixed to the base 2 in the first configuration, the operator may clear the semicircular left recesses 28c, 28d aligned to the left channel 21 by removing (e.g. by pressing them with a finger tip or a tool) the closure tabs 280c, 280d. This creates two semicircular openings that allow the riser cable entering and exiting the riser box 1 on the left side thereof. If the external diameter of the riser cable is larger than the radius of the semicircular left recesses 28c, 28d, the operator may also remove the left removable portions 500c, 500d provided on the sidewalls 5c, 5d of the cover 5. This creates two circular openings that allow the riser cable entering and exiting the riser box 1 on the left side thereof.

Similarly, if the adapter 3 is fixed to the base 2 in the second configuration, the operator may clear the semicircular right recesses 29c, 29d aligned to the right channel 22 by removing (e.g. by pressing them with a finger tip or a tool) the closure tabs 290c, 290d. This creates two semicircular openings that allow the riser cable entering and exiting the riser box 1 on the right side thereof. Again, if the external diameter of the riser cable is larger than the radius of the semicircular right recesses 29c, 29d, the operator may also remove the right removable portions 510c, 510d provided on the sidewalls 5c, 5d of the cover 5. This creates two circular openings that allow the riser cable entering and exiting the riser box 1 on the right side thereof.

The operator may then cut a window in the external sheath of the riser cable, and extract one or more micromodules from the riser cable through the cut window.

Then, if the adapter 3 is fixed to the base 2 in the first configuration, the operator may arrange the riser cable in the left channel 21 and in the corresponding left recesses 28c, 28d, so that the cut window is contained in the base 2 (see Figure 7, where the reference numeral 6 indicates the riser cable while the reference numeral 6a indicates the cut window). Similarly, if the adapter 3 is fixed to the base 2 in the second configuration, the operator may arrange the riser cable in the right channel 22 and in the corresponding right recesses 29c, 29d, so that the cut window is contained in the base 2.

Then, the operator may remove one or more of the removable portions 27a and/or 27b of the sidewall 2c, according to the number of drop cables that has to be connected to the riser cable, thereby creating a number of openings in the sidewall 2c. Then, the operator inserts the free end of one or more drop cables through each opening, and fixes them in the base 2 by means of the drop cable fixing tabs 24 facing the sidewall 2c.

Then, the operator may fix the splice trays 4-1, 4-2, ... 4-8 to the pairs of hinges 33 and rotate them in their first position show in Figure 7, in which the splice trays 4-1, 4-2, ... 4-8 are stacked and have their upper surfaces facing away the adapter 3.

The operator may then extract the drop fibers of a first drop cable by removing a length of the drop cable sheath, extract the riser fibers of a first micromodule in turn extracted from the riser cable and arrange both the riser fibers and the drop fibers on the plate 30 of the adapter 3. In particular, the riser fibers and the drop fibers are passed beside and/or around the splice trays 4-1, 4-2, ... 4-8, i.e. externally to the hinges 33. The fiber retaining tabs 34 and 26 advantageously prevent the drop fibres and riser fibers from drawing away from the base 2.

Then, the operator may choose, among the splice trays 4-1, 4-2, ... 4-8, the splice tray that will house the splices between the riser fibers and the drop fibers (for instance, the splice tray 4-1), and then access its upper surface by rotating the overhanging splice trays (i.e. the splice trays 4-2, ... 4-8) from their first position to the second position.

After rotating the overhanging splice trays 4-2, ... 4-8, the operator may bring the ends of both the riser fibers and the drop fibers to the upper surface of the chosen splice tray 4-1. To this purpose, the free ends of the riser fibers and drop fibers may be passed from the peripheral area of the plate 30 (i.e. external to the hinges 33) underneath the hinged side of the splice tray 4-1 internally to the hinges 33 coupling the splice tray 4-1 to the adapter 3, so that they reach the central area of the plate 30 (i.e. internal to the hinges 33), where they may be arranged in the guiding channels defined by the fiber guiding protrusions 35. From the central area of the plate 30, the riser fibers and drop fibers may be then brought to the upper surface of the splice tray 4-1 through its fiber inlet/outlets 44, that are arranged internally to the hinges 33. This arrangement of the drop fibers and riser fibers on the plate 30 and the splice tray 4-1 is advantageously very tidy and eases subsequent access and handling of the fibers. Furthermore, the hinges 33 and the hinged side of the splice tray 4-1 perform a retaining function on the riser fibers and drop fibers, thereby contributing to tidily keep them.

The operator may then connect each riser fiber to a respective drop fiber, e.g. by means of splices. Then, the operator may arrange the splices in the splice holders 43 of the splice tray 4-1, while the excess length of the riser fibers and the drop fibers may be arranged in the guiding channels 41 and around the central mandrel 42 of the splice tray 4-1.

The operator may then repeat the above operations for a second drop cable entering the base 2 through either the same opening as the first drop cable or another opening. In particular, the operator may extract the drop fibers of the second drop cable, extract the riser fibers of a second micromodule in turn extracted from the riser cable and arrange both the riser fibers and the drop fibers on the plate 30 of the adapter 3.

If one or more splice holders 43 of the previously used splice tray 4-1 are still free, the operator may use the same splice-tray 4-1 for arranging the splices between the riser fibers of the second micromodule and the drop fibers of the second drop cable.

Otherwise, the operator may choose another splice tray among the remaining unused splice trays 4-2, ... 4-8 (for instance, the splice tray 4-2), and then access its upper surface by rotating it from its second position to its first position, so that it covers the upper surface of the splice tray 4-1. Then, the operator may bring the ends of both the riser fibers and the drop fibers to the upper surface of the splice tray 4-2, connect each riser fiber to a respective drop fiber, e.g. by means of splices, and arrange the splices in the splice holders 43 of the splice tray 4-2.

The operator may repeat the above operations for each drop cable having an end housed in the base 2 of the riser box 1.

Then, the operator may rotate the locking device 2f from its installation position shown in Figure 5b to its locking position shown in Figure 5a. As mentioned above, in this locking position the locking device 2f (in particular, its tilted U-shaped body 21 f) blocks the splice trays in their stacked position show in Figure 7.

Then, the operator may fit the cover 5 onto the base 2, thereby closing the riser box 1. The operator may then lock the cover 5 to the base 2 by operating the further locking device 5f with a screw driver or a key. This brings the tab of the further locking device 5f from its open position to its closed position show in Figure 5a. This advantageously prevents non-authorized parties from opening the riser box 1 and tampering or damaging its content.

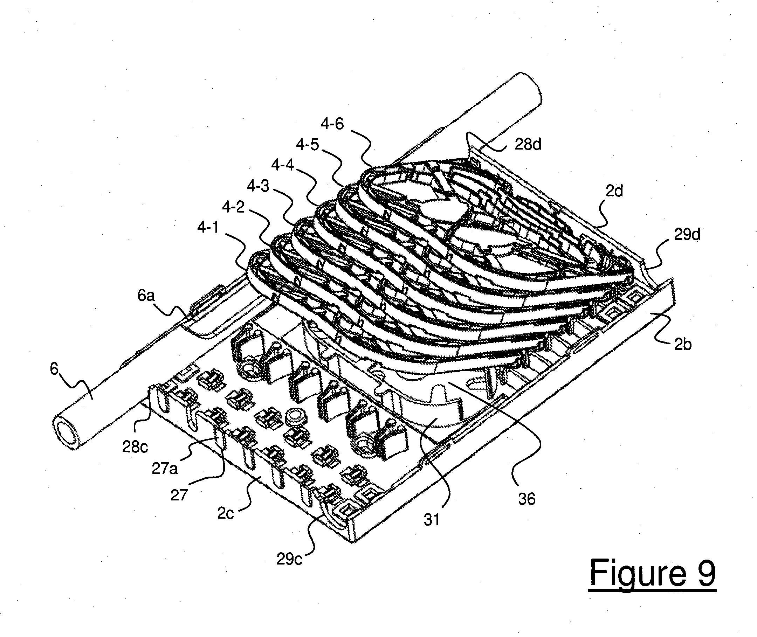

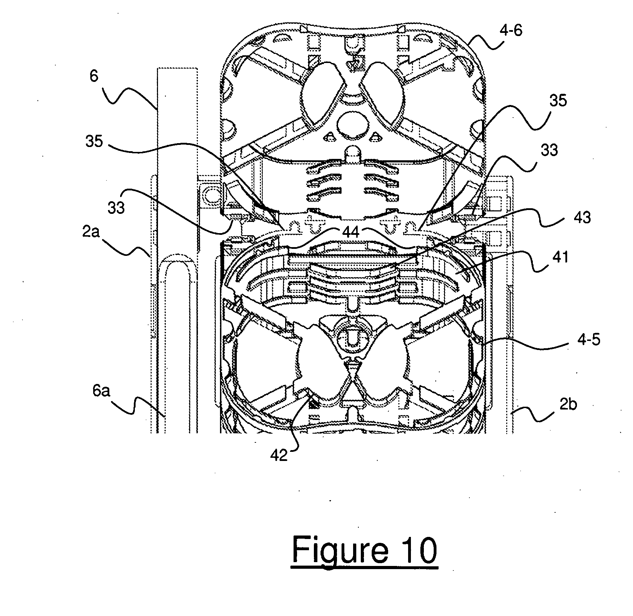

Figures 9 and 10 show a riser box 1 according to an advantageous variant. The riser box 1 according to such an advantageous variant comprises, in the base 2, six U-shaped weakening lines 27. The sidewall 2c does not comprise the straight weakening line 27', and accordingly each weakening line 27 defines a single respective removable portion 27a of the sidewall 2c. The adapter 3 comprises six pairs of hinges 33, meaning that the riser box 1 according to such an advantageous variant may comprise up to six splice trays 4-1, 4-2, ... 4-6. The adapter 3 preferably comprises, between the hinges 33 and the wall 31, a fiber receiving area 36 where possible extra-length of riser fibers and drop fibers may be arranged. Further, according to this variant, the riser box does not comprise any locking mechanism suitable for locking the cover to the base 2 (the cover being merely snap-fitted onto the base 2 for closing the riser box).

The riser box shown in the drawings has a number of advantages.

First of all, the operator may decide, on a case-by-case basis, whether to arrange the riser cable on the left side or the right side of the riser box, depending on the reciprocal positions of the duct in which the riser cable is laid down and the wall portion to which the riser box is fixed.

This is achieved without requiring any increase of the riser box size. Indeed, while one of the left and right channels is used for allowing the riser cable passing straight through the box base, the other unused channel does not needlessly occupy space on the base, because it is covered by the adapter (i.e. it is used for fixing the splice trays and arranging the riser and drop fibers). This results in a very compact riser box.

The channel for allowing the riser cable passing straight through the base may be provided either on the right side or the left side of the base by simply connecting the adapter to the base in the first or second configuration. This operation is very fast and simple, and may be easily performed by the operator responsible of the installation.

Further, the riser box allows arranging the optical connections between the riser box and the drop cables in a well-ordered way. Indeed, instead of comprising a single, large splice tray suitable for receiving the splices between the riser fibers and the drop fibers of all the drop cables associated to the users residing at a same floor, the riser box according to embodiments of the present invention comprises a number of smaller splice trays. Each splice tray may be used for receiving the splices between the riser fibers and the drop fibers of the drop cables associated to one or two users residing at a same floor. In other words, the splices between the riser fibers and the drop fibers of all the drop cables associated to the users residing at a same floor are distributed among the smaller splice trays, that may be individually accessed by the operator by rotating the overhanging splice trays from the stacked position of Figure 7 to the position of Figure 8. The operator may then manage more easily the splices associated to the various users.

Further, instead of providing a single central hinge for fixing each splice tray to the adapter, two spaced lateral hinges are provided. This arrangement facilitates the operation of bringing the riser fibers and the drop fibers from the plate of the adapter to the upper surface of the splice trays and, as described above, allows tidily arranging the fibers on the adapter.

Further, the riser box according to embodiments of the present invention may be used in combination with riser cables of different external diameters, without the need of providing very large openings in the sidewalls of the base. Indeed, if the riser cable has a small diameter, for allowing the riser cable entering and exiting the riser box it is sufficient removing the closure tabs from the left or right recesses of the base sidewalls, thereby creating small semicircular openings. On the other hand, if the riser cable has a larger diameter, the opening size may be increased by removing also the left or right removable portions of the cover.

## Claims

1. A riser box (1) suitable for housing an optical connection between a riser cable (6) and at least one drop cable of an optical access network, said riser box (1) comprising:
- a base (2) having a first channel (21) configured to allow said riser cable (6) passing through said base (2) along a first side thereof, and a second channel (22) substantially parallel to said first channel (22) and configured to allow said riser cable (6) passing through said base (2) along an opposite second side thereof;
- at least one splice tray (4-1, 4-2, ... 4-8); and
- an adapter (3) configured to support said splice tray (4-1, 4-2, ... 4-8), said adapter (3) being alternatively connectable to said base (2) according to a first configuration, in which it engages said first channel (21) and leaves said second channel (22) free, and a second configuration, in which it engages said second channel (22) and leaves said first channel (21) free.

2. The riser box (1) according to claim 1, wherein said base (2) comprises a first fixing element (23).

3. The riser box (1) according to claim 2, wherein said adapter (3) comprises two second fixing elements (32a, 32b) suitable for alternatively engaging with said first fixing element (23) of said base (2) for connecting said adapter (3) to said base (2) alternatively according to said first configuration and said second configuration.

4. The riser box (1) according to any of the preceding claims, wherein said base (2) comprises two opposite sidewalls (2c, 2d) perpendicular to said first channel (21) and said second channel (22).

5. The riser box (1) according to claim 4, wherein one sidewall (2c) of said two opposite sidewalls (2c, 2d) has at least one first weakening line (27, 27') defining at least one first removable portion (27a, 27b) of said one sidewall (2c), each one of said first weakening line (27, 27') being such that, when the corresponding first removable portion (27a, 27b) is removed, an opening is created in said one sidewall (2c) which is suitable for receiving an end of said drop cable.

6. The riser box (1) according to claim 4 or 5, wherein each one of said two opposite sidewalls (2c, 2d) has a first recess (28c, 28d) substantially aligned with said first channel (21) and a second recess (29c, 29d) substantially aligned with said second channel (22).

7. The riser box (1) according to claim 6, wherein at least one of said first recess (28c, 28d) and said second recess (29c, 29d) is partially engaged by a removable closure tab (280c, 280d, 290c, 290d).

8. The riser box (1) according to any of the preceding claims, further comprising a cover (5) configured to be fitted onto said base (2) for closing said riser box (1).

9. The riser box (1) according to claim 8, wherein said cover (5) has second weakening lines (50c, 50d) defining opposite second removable portions (500c, 500d) and third weakening lines (51c, 51 d) defining opposite third removable portions (510c, 510d), said opposite second removable portions (500c, 500d) being aligned with said first channel (21) and said opposite third removable portions (510c, 510d) being aligned with said second channel (22) when said cover (5) is fitted onto said base (2).

10. The riser box (1) according to claim 8 or 9, wherein it further comprises a locking mechanism for locking said cover (5) on said base (2).

11. The riser box (1) according to claim 10, wherein said locking mechanism comprises a locking device (2f) rotatably hinged to said base (2), said locking device (2f) being rotatable between an installation position, in which it leaves free access to the interior of said base (2), and a locking position, in which it projects towards the interior of said base (2).

12. The riser box (1) according to any of the preceding claims, wherein said adapter (3) comprises at least one pair of hinges (33) configured to rotatably hinge said splice tray (4-1, 4-2, ...4-8) to said adapter (3).

13. The riser box (1) according to claim 12, wherein said splice tray (4-1, 4-2, ...4-8) has at least one fiber inlet/outlet (44) allowing one or more optical fibers entering and exiting an upper surface of said splice tray (4-1, 4-2, ...4-8), said fiber inlet/outlet (44) being arranged between said hinges (33) when said splice tray (4-1, 4-2, ...4-8) is rotatably hinged to said adapter (3).

14. The riser box (1) according to any of the preceding claims, wherein it comprises at least two splice trays (4-1, 4-2, ...4-8).

15. The riser box (1) according to claim 14, wherein each one of said splice trays (4-1, 4-2, ...4-8) is rotatable between a first position and a second position, wherein:
- when all said splice trays (4-1, 4-2, ...4-8) are rotated in said first position, said splice trays (4-1, 4-2, ...4-8) are stacked and at least partially cover said adapter (3); and
- when an overhanging splice tray (4-8) of said splice trays (4-1, 4-2, ...4-8) is rotated in said second position and an underlying splice tray (4-7) of said splice trays (4-1, 4-2, ...4-8) is rotated in said first position, said overhanging splice tray (4-8) leaves free access to said underlying splice tray (4-7).

## Patentansprüche

1. Verteilerkasten (1), der sich zum Aufnehmen einer optischen Verbindung zwischen einem Verteilerkabel (6) und wenigstens einem Endkabel eines optischen Zugangsnetzes eignet, wobei der Verteilerkasten (1) umfasst:
- einen Sockel (2) mit einem ersten Durchlass (21), der so gestaltet ist, dass er zulässt, dass das Verteilerkabel (6) durch den Sockel (2) an einer ersten Seite desselben hindurchtritt, und einem zweiten Durchlass (22), der im Wesentlichen parallel zu dem ersten Durchlass (22) ist und so gestaltet ist, dass er zulässt, dass das Verteilerkabel (6) durch den Sockel (2) an einer gegenüberliegenden zweiten Seite desselben hindurchtritt;
- wenigstens ein Spleißmodul (4-1, 4-2, ... 4-8); und
- einen Adapter (3), der so gestaltet ist, dass er das Spleißmodul (4-1, 4-2, ... 4-8) trägt, wobei der Adapter (3) mit dem Sockel (2) alternativ in einer ersten Konfiguration, in der er mit dem ersten Durchlass (21) in Eingriff ist und den zweiten Durchlass (22) freilässt, oder in einer zweiten Konfiguration verbunden werden kann, in der er mit dem zweiten Durchlass (22) in Eingriff ist und den ersten Durchlass (21) freilässt.

2. Verteilerkasten (1) nach Anspruch 1, wobei der Sockel (2) ein erstes Befestigungselement (23) umfasst.

3. Verteilerkasten (1) nach Anspruch 2, wobei der Adapter (3) zwei zweite Befestigungselemente (32a, 32b) umfasst, die sich dazu eignen, alternativ mit dem ersten Befestigungselement (23) des Sockels (2) in Eingriff zu kommen, um den Adapter (3) alternativ in der ersten Konfiguration oder der zweiten Konfiguration mit dem Sockel (2) zu verbinden.

4. Verteilerkasten (1) nach einem der vorangehenden Ansprüche, wobei der Sockel (2) zwei einander gegenüberliegende Seitenwände (2c, 2d) senkrecht zu dem ersten Durchlass (21) und dem zweiten Durchlass (22) umfasst.

5. Verteilerkasten (1) nach Anspruch 4, wobei eine Seitenwand (2c) der zwei einander gegenüberliegenden Seitenwände (2c, 2d) wenigstens eine erste Schwächungslinie (27, 27') aufweist, die wenigstens einen ersten entfernbaren Abschnitt (27a, 27b) der einen Seitenwand (2c) bildet, wobei jede erste Schwächungslinie (27, 27') so eingerichtet ist, dass, wenn der entsprechende erste entfernbare Abschnitt (27a, 27b) entfernt wird, eine Öffnung in der einen Seitenwand (2c) geschaffen wird, die sich zum Aufnehmen eines Endes des Endkabels eignet.

6. Verteilerkasten (1) nach Anspruch 4 oder 5, wobei jede der zwei einander gegenüberliegenden Seitenwände (2c, 2d) jeweils eine erste Aussparung (28c, 28d), die im Wesentlichen mit dem ersten Durchlass (21) fluchtend ist, und eine zweite Aussparung (29c, 29d) aufweist, die im Wesentlichen mit dem zweiten Durchlass (22) fluchtend ist.

7. Verteilerkasten (1) nach Anspruch 6, wobei eine entfernbare Verschlusslasche (280c, 280d, 290c, 290d) teilweise in die erste Aussparung (28c, 28d) oder/und die zweite Aussparung (29c, 29d) eingreift.

8. Verteilerkasten (1) nach einem der vorangehenden Ansprüche, der des Weiteren eine Abdeckung (5) umfasst, die so gestaltet ist, dass sie auf den Sockel (2) aufgesetzt wird, um den Verteilerkasten (1) zu verschließen.

9. Verteilerkasten (1) nach Anspruch 8, wobei die Abdeckung (5) zweite Schwächungslinien (50c, 50d), die einander gegenüberliegende zweite entfernbare Abschnitte (500c, 500d) bilden, und dritte Schwächungslinien (51 c, 51 d) aufweist, die einander gegenüberliegende dritte entfernbare Abschnitte (510c, 510d) bilden, wobei die einander gegenüberliegenden zweiten entfernbaren Abschnitte (500c, 500d) mit dem ersten Durchlass (21) fluchtend sind und die einander gegenüberliegenden dritten entfernbaren Abschnitte (510c, 510d) mit dem zweiten Durchlass (22) fluchtend sind, wenn die Abdeckung (5) auf den Sockel (2) aufgesetzt ist.

10. Verteilerkasten (1) nach Anspruch 8 oder 9, wobei er des Weiteren einen Arretiermechanismus zum Arretieren der Abdeckung (5) an dem Sockel (2) umfasst.

11. Verteilerkasten (1) nach Anspruch 10, wobei der Arretiermechanismus eine Arretiervorrichtung (2f) umfasst, die drehbar an dem Sockel (2) angelenkt ist, die Arretiervorrichtung (2f) zwischen einer Installations-Position, in der sie freien Zugang zu dem Innenraum des Sockels (2) belässt, und einer Verriegelungsposition gedreht werden kann, in der sie zu dem Innenraum des Sockels (2) hin vorsteht.

12. Verteilerkasten (1) nach einem der vorangehenden Ansprüche, wobei der Adapter (3) wenigstens ein Paar Scharniere (33) umfasst, die zum drehbaren Anlenken des Spleißmoduls (4-1, 4-2, ... 4-8) an dem Adapter (3) eingerichtet sind.

13. Verteilerkasten (1) nach Anspruch 12, wobei das Spleißmodul (4-1, 4-2, ... 4-8) einen Faser-Einlass/Auslass (44) aufweist, der eine oder mehrere optische Faser/n an einer oberen Fläche des Spleißmoduls (4-1, 4-2, ... 4-8) eintreten und austreten lässt, und der Faser-Einlass/Auslass (44) zwischen den Scharnieren (33) angeordnet ist, wenn das Spleißmodul (4-1, 4-2, ... 4-8) drehbar an dem Adapter (3) angelenkt ist.

14. Verteilerkasten (1) nach einem der vorangehenden Ansprüche, wobei er wenigstens zwei Spleißmodule (4-1, 4-2, ... 4-8) umfasst.

15. Verteilerkasten (1) nach Anspruch 14, wobei jedes der Spleißmodule (4-1, 4-2, ... 4-8) zwischen einer ersten Position und einer zweiten Position gedreht werden kann, und:
- wenn alle Spleißmodule (4-1, 4-2, ... 4-8) an die erste Position gedreht sind, die Spleißmodule (4-1, 4-2, ... 4-8) übereinander geschichtet sind und den Adapter (3) wenigstens teilweise abdecken; und
- wenn ein überhängendes Spleißmodul (4-8) der Spleißmodule (4-1, 4-2, ... 4-8) an die zweite Position gedreht ist und ein darunter befindliches Spleißmodul (4-7) der Spleißmodule (4-1, 4-2, ... 4-8) an die erste Position gedreht ist, das überhängende Spleißmodul (4-8) freien Zugang zu dem darunter liegenden Spleißmodul (4-7) belässt.

## Revendications

1. Coffret de distribution (1) adapté pour loger une connexion optique entre un câble montant (6) et au moins un câble de descente d'un réseau d'accès optique, ledit coffret de distribution (1) comprenant :
- une base (2) ayant un premier canal (21) configuré pour permettre audit câble montant (6) de passer à travers ladite base (2) le long d'un premier côté de celle-ci et un deuxième canal (22) sensiblement parallèle audit premier canal (22) et configuré pour permettre audit câble montant (6) de passer à travers ladite base (2) le long d'un deuxième côté opposé de celle-ci ;
- au moins un plateau de jonction (4-1, 4-2, ... 4-8) ; et
- un adaptateur (3) configuré pour supporter ledit plateau de jonction (4-1, 4-2, ... 4-8), ledit adaptateur (3) pouvant être connecté de manière alternative à ladite base (2) selon une première configuration, dans laquelle il met en prise ledit premier canal (21) et laisse ledit deuxième canal (22) libre, et une deuxième configuration, dans laquelle il met en prise ledit deuxième canal (22) et laisse ledit premier canal (21) libre.

2. Coffret de distribution (1) selon la revendication 1, dans lequel ladite base (2) comprend un premier élément de fixation (23).

3. Coffret de distribution (1) selon la revendication 2, dans lequel ledit adaptateur (3) comprend deux deuxièmes éléments de fixation (32a, 32b) adaptés pour se mettre en prise de manière alternative avec ledit premier élément de fixation (23) de ladite base (2) pour connecter ledit adaptateur (3) à ladite base (2) de manière alternative suivant ladite première configuration et ladite deuxième configuration.

4. Coffret de distribution (1) selon l'une quelconque des revendications précédentes, dans lequel ladite base (2) comprend deux parois latérales opposées (2c, 2d) perpendiculaires audit premier canal (21) et audit deuxième canal (22).

5. Coffret de distribution (1) selon la revendication 4, dans lequel une paroi latérale (2c) desdites deux parois latérales opposées (2c, 2d) a au moins une première ligne d'affaiblissement (27, 27') définissant au moins une première portion amovible (27a, 27b) de ladite une paroi latérale (2c), chacune de ladite première ligne d'affaiblissement (27, 27') étant telle que, quand la première portion amovible correspondante (27a, 27b) est retirée, une ouverture est créée dans ladite une paroi latérale (2c), qui est adaptée pour recevoir une extrémité dudit câble de descente.

6. Coffret de distribution (1) selon la revendication 4 ou 5, dans lequel chacune desdites deux parois latérales opposées (2c, 2d) a un premier évidement (28c, 28d) sensiblement aligné avec ledit premier canal (21) et un deuxième évidement (29c, 29d) sensiblement aligné avec ledit deuxième canal (22).

7. Coffret de distribution (1) selon la revendication 6, dans lequel au moins un dudit premier évidement (28c, 28d) et dudit deuxième évidement (29c, 29d) est partiellement mis en prise par une languette de fermeture amovible (280c, 280d, 290c, 290d).

8. Coffret de distribution (1) selon l'une quelconque des revendications précédentes, comprenant en outre un couvercle (5) configuré pour être monté sur ladite base (2) pour fermer ledit coffret de distribution (1).

9. Coffret de distribution (1) selon la revendication 8, dans lequel ledit couvercle (5) a des deuxièmes lignes d'affaiblissement (50c, 50d) définissant des deuxièmes portions amovibles opposées (500c, 500b) et des troisièmes lignes d'affaiblissement (51c, 51d) définissant des troisièmes portions amovibles opposées (510c, 510d), lesdites deuxièmes portions amovibles opposées (500c, 500d) étant alignées avec ledit premier canal (21) et lesdites troisièmes portions amovibles opposées (510c, 510d) étant alignées avec ledit deuxième canal (22) quand ledit couvercle (5) est monté sur ladite base (2).

10. Coffret de distribution (1) selon la revendication 8 ou 9, comprenant en outre un mécanisme de verrouillage pour bloquer ledit couvercle (5) sur ladite base (2).

11. Coffret de distribution (1) selon la revendication 10, dans lequel ledit mécanisme de verrouillage comprend un dispositif de verrouillage (2f) articulé de manière rotative avec ladite base (2), ledit dispositif de verrouillage (2f) pouvant être entraîné en rotation entre une position d'installation, dans laquelle il laisse un libre accès à l'intérieur de ladite base (2) et une position de verrouillage, dans laquelle il fait saillie vers l'intérieur de ladite base (2).

12. Coffret de distribution (1) selon l'une quelconque des revendications précédentes, dans lequel ledit adaptateur (3) comprend au moins une paire de charnières (33) configurées pour articuler de manière rotative ledit plateau de jonction (4-1, 4-2, ... 4-8) avec ledit adaptateur (3).

13. Coffret de distribution (1) selon la revendication 12, dans lequel ledit plateau de jonction (4-1, 4-2, ... 4-8) a au moins une entrée/sortie de fibre (44) permettant à une ou plusieurs fibres optiques d'entrer et de sortir par une surface supérieure dudit plateau de jonction (4-1, 4-2, ... 4-8), ladite entrée/sortie de fibre (44) étant disposée entre lesdites charnières (33) quand ledit plateau de jonction (4-1, 4-2, ... 4-8) est articulé de manière rotative avec ledit adaptateur (3).

14. Coffret de distribution (1) selon l'une quelconque des revendications précédentes, comprenant au moins deux plateaux de jonction (4-1, 4-2, ... 4-8).

15. Coffret de distribution (1) selon la revendication 14, dans lequel chacun desdits plateaux de jonction (4-1, 4-2, ... 4-8) peut être entraîné en rotation entre une première position et une deuxième position, dans lequel :
- quand tous lesdits plateaux de jonction (4-1, 4-2, ... 4-8) sont entraînés en rotation dans ladite première position, lesdits plateaux de jonction (4-1, 4-2, ... 4-8) sont empilés et couvrent au moins partiellement ledit adaptateur (3) ; et
- quand un plateau de jonction en porte-à-faux (4-8) desdits plateaux de jonction (4-1, 4-2, ... 4-8) est entraîné en rotation dans ladite deuxième position et un plateau de jonction sous-jacent (4-7) desdits plateaux de jonction (4-1, 4-2, ... 4-8) est entraîné en rotation dans ladite première position, ledit plateau de jonction en porte-à-faux (4-8) laisse un libre accès audit plateau de jonction sous-jacent (4-7).
